# EUROPÄISCHE PATENTSCHRIFT

(11) **EP 0 336 165 B1**
(45) Veröffentlichungstag und Bekanntmachung des Hinweises auf die Patenterteilung: **01.12.1993**
(21) Anmeldenummer: 89104710.2
(22) Anmeldetag: 16.03.1989
(51) Int. Cl.: C08G 12/40, C08G 12/30, C04B 24/22

(54) **Verfahren zur Herstellung von Sulfonsäuregruppen enthaltenden Kondensationsprodukten mit einem geringen freien Formaldehyd-Gehalt**
Process for producing sulfonic-acid-groups containing condensation products with low content of free formaldehyde
Procédé de préparation de produits de condensation a bas teneur de formaldéhyde libre contenant des groupes d'acide sulfoniques

(30) Priorität: 25.03.1988 DE 3810114
(43) Veröffentlichungstag der Anmeldung: 11.10.1989
(73) Patentinhaber: SKW Trostberg Aktiengesellschaft, 83308 Trostberg (DE)
(72) Erfinder: Weichmann, Josef, Dr., D-8261 Pleiskirchen (DE); Bichler, Manfred, D-8261 Engelsberg (DE); Kern, Alfred, Dr., D-8261 Kirchweidach (DE); Rosenbauer, Hans-Günter, Dr., D-8223 Trostberg (DE)
(74) Vertreter: Huber, Bernhard, Dipl.-Chem.

(56) Entgegenhaltungen:
- EP-A- 0 248 098
- DE-A- 1 745 441
- DE-A- 3 605 124
- ZA-A- 782 022
- MAKROMOLEKULARE CHEMIE, Band 71. Nr. 1134, August 1978, Seiten 221-226; H. BAUMANN: "Ueber die Einwirkung konzentrierter Erdalkalihydroxyde auf Harnstoff-Formaldehyd-Harze"
- BERICHTE DER DEUTSCHEN CHEMISCHEN GESELLSCHAFT, Band 64, 1931, Seiten 398-405, Verlag Chemie GMBH Berlin, D; H. STAUDINGER et al.: "Ueber hochpolymere Verbindungen, 49. Mitteilung über die Einwirkung von Basen auf Formaldehyd-Lösungen"

## Beschreibung

Die vorliegende Erfindung betrifft ein Verfahren zur Herstellung von Sulfonsäuregruppen enthaltenden Kondensationsprodukten auf Basis von Amino-s-triazinen mit mindestens zwei Aminogruppen und Formaldehyd, welche einen geringen freien Formaldehyd-Gehalt aufweisen.

Es ist aus der DE-PS 16 71 017 bekannt, Baumaterialien unter Zusatz eines mit Sulfit oder Sulfonsäure modifizierten Harzes auf Basis eines Amino-s-triazins mit mindestens zwei NH₂-Gruppen herzustellen. Die hierbei verwendeten sulfonsäuremodifizierten Melamin- bzw. Guanaminharze sind nur mit einem Feststoffgehalt bis zu etwa 20 Gew.-% herstellbar und weisen einen relativ hohen freien Formaldehyd-Gehalt auf.

Kondensationsprodukte dieses Typs mit hohem Feststoffgehalt von bis zu 50 Gew.-% können gemäß den Verfahren der ZA 78/2022 sowie der DE-PS 23 59 291 hergestellt werden, doch ist der freie Formaldehyd-Gehalt dieser Melamin-Formaldehyd-Kondensationsprodukte unvermindert hoch.

Dies trifft für die Kondensationsprodukte, die gemäß der DE-PS 25 05 578 noch einen zusätzlichen Gehalt an Harnstoff aufweisen, ebenso zu wie für die Produkte gemäß der DE-OS 31 07 852, für deren Herstellung außerdem die relativ teuren Amino- und Carbonsäuren verwendet werden, um die erforderlichen pH-Werte einzustellen. Letzteres erscheint vor allem in wirtschaftlicher Hinsicht problematisch.

Natürlich ist es prinzipiell möglich, den freien Formaldehyd-Gehalt dieser Harze nachträglich durch Zugabe eines Formaldehyd-Fängers, bspw. auf Basis von Harnstoff oder Harnstoffderivaten, zu senken.

So ist zum Beispiel in der DE-OS 36 05 124 vorgeschlagen worden, α-Methylketone in großem Überschuß zum Abfangen des überschüssigen Formaldehyds einzusetzen. Auf diese Weise gelangen jedoch Fremdstoffe in das Kondensationsprodukt, was für viele Anwendungsbereiche unerwünscht ist, weil die Qualität des Produktes hierbei negativ beeinflußt werden kann. Außerdem stellt diese nachträgliche Behandlung einen zusätzlichen Behandlungsschritt dar, der zusätzliche Betriebs- und Investitionskosten erfordert und deshalb wirtschaftlich problematisch ist.

Aus H. Baumann Angewandte Makromolekulare Chemie, Bd. 71 (1134), S. 221 ff (1978) ist es bekannt, daß man durch Zugabe konzentrierter Erdalkalihydroxide zu Harnstoff-Formaldehyd-Harzen den freien Formaldehydgehalt dieser Harze reduzieren kann, doch findet hierbei eine weitgehende Entmethylolierung der entsprechenden Harze statt, wobei die höhermolekularen methylenverbrückten Oligomere und bereits teilvernetzte Kondensate ausfallen.

Der vorliegenden Erfindung lag daher die Aufgabe zugrunde, ein Verfahren zur Herstellung von Sulfonsäuregruppen enthaltenden Kondensationsprodukten auf Basis von Amino-s-triazinen mit wenigstens zwei Aminogruppen und Formaldehyd mit einem geringen freien Formaldehyd-Gehalt zu entwickeln, welches die genannten Nachteile des Standes der Technik nicht aufweist, sondern mit geringem technischem Aufwand und ohne Zuhilfenahme von Fremdstoffen eine wirkungsvolle Unterdrückung der freien Formaldehyd-Bildung ermöglicht.

Diese Aufgabe wurde erfindungsgemäß dadurch gelöst, daß man
a) Amino-s-triazin, Formaldehyd und Sulfit im Molverhältnis 1 : 1,3 bis 6: 0,3 bis 1,5 in wäßriger Lösung bei einem pH-Wert von 9,0 bis 12,0 und einer Temperatur von 50 bis 90°C so lange kondensiert, bis kein Sulfit mehr nachweisbar ist,
b) anschließend bei einem pH-Wert von 2,0 bis 7,0 und einer Temperatur von 80 bis 90 °C so lange weiterkondensiert, bis die Viskosität der Lösung 4 bis 1000 mm²/s bei 80 °C beträgt, und
c) danach das Kondensationsprodukt solange im stark alkalischen Bereich bei pH > 11,0 bei einer Temperatur von 50 bis 100 °C einer Nachbehandlung unterwirft, bis der freie Formaldehydgehalt einan konstantan Wert von < 0,1 Gew.-%, bezogen auf das Gesamtgewicht der Lösung, erreicht hat.

Es hat sich nämlich überraschenderweise gezeigt, daß man auf diese Weise den freien Formaldehyd-Gehalt der Kondensationsprodukte sehr stark reduzieren kann. Außerdem lassen sich mit Hilfe des erfindungsgemäßen Verfahrens relativ hoch konzentrierte Produkte mit guten verflüssigenden Eigenschaften herstellen, was ebenfalls nicht vorhersehbar war.

Als weiterer überraschender Effekt muß die Tatsache gesehen werden, daß die erfindungsgemäß hergestellten Kondensate sowohl bei Raum- als auch bei erhöhter Temperatur eine ausgezeichnete Lagerstabilität besitzen, d.h. sie verändern ihre Viskosität kaum und behalten ihre verflüssigende Wirkung auch nach längerer Lagerzeit unverändert bei.

Beim Verfahren entsprechend der vorliegenden Erfindung werden in der ersten Stufe die Komponenten Amino-s-triazin, Formaldehyd und Sulfit so lange kondensiert, bis nach den üblichen Methoden praktisch kein Sulfit mehr nachweisbar ist.

Als Amino-s-triazin mit mindestens zwei NH₂-Gruppen werden bevorzugt Melamin aber auch Guanamine wie z.B. Benzo- oder Acetoguanamin eingesetzt. Es ist im Rahmen der vorliegenden Erfindung auch möglich, eine Mischung von Amino-s-triazin mit anderen Aminoplastbildnern einzusetzen, wobei bis zu 50 Mol-% der Mischung aus einem anderen Aminoplastbildner wie z.B. Harnstoff, Thioharnstoff, Dicyandiamid oder Guanidin(-Salze) bestehen können.

Formaldehyd wird vorzugsweise in Form einer 30 %igen oder auch höherprozentigen wäßrigen Formalin-Lösung oder als Paraformaldehyd verwendet.

Zur Modifizierung der erfindungsgemäßen Kondensationsprodukte setzt man als Sulfonsäuregruppen einführende Verbindungen die üblichen Sulfitderivate ein, wobei im allgemeinen die Alkali- oder Erdalkalisulfite als bevorzugt anzusehen sind. Es kann aber auch ohne weiteres auf Bisulfite oder Pyrosulfite zurückgegriffen werden.

Das Molverhältnis von Amino-s-triazin : Formaldehyd : Sulfit beträgt 1 : 1,3 bis 6 : 0,3 bis 1,5, um einerseits eine noch ausreichende verflüssigende Wirkung und andererseits einen niedrigen freien Formaldehyd-Gehalt aufzuweisen. Vorzugsweise beträgt das Molverhältnis Amino-s-triazin : Formaldehyd : Sulfit 1 : 2,0 bis 3,0 : 0,8 bis 1,3. Wenn ein Teil des Amino-s-triazins durch einen Aminoplastbildner ersetzt wird, so geht dieser in das Molverhältnis mit ein.

Die Kondensationsreaktion wird in wäßriger Lösung durchgeführt, wobei die Konzentration der Reaktionsmischung in der wäßrigen Lösung bevorzugt so einiestellt wird, daß das Kondensationsprodukt mit einem Feststoffgehalt von 25 bis 55 Gew.-%, insbesondere 40 bis 50 Gew.-%, anfällt.

Es ist natürlich auch möglich, mit einer geringeren Konzentration zu arbeiten, falls dies aus irgendwelchen Gründen sinnvoll ist.

Die Reihenfolge der Zugabe der Reaktionskomponenten in der ersten Stufe ist relati unproblematisch, doch hat es sich im Hinblick auf die Reaktionsführung bzw. -kontrolle als besonders vorteilhaft erwiesen, den Formaldehyd in wäßriger Lösung vorzulegen und nacheinander das Amino-s-triazin und die Sulfitkomponente in die Reaktionslösung einzutragen.

Der pH-Wert in der ersten Stufe wird auf 9,0 bis 12,0, vorzugsweise auf 10,5 bis 11,5 eingestellt, was mit üblichen alkalisch reagierenden Verbindungen oder Salzen, insbesondere Hydroxiden erfolgen kann. Aus Kostengründen wird zur alkalischen pH-Werteinstellung vorzugsweise Natronlauge verwendet. Die pH-Werteinstellung kann auch in mehreren Stufen erfolgen.

Die Reaktionstemperatur in der ersten Stufe wird auf 50 bis 90°C eingestellt, um eine vernünftige Reaktionszeit einhalten zu können.

Nach Abschluß der ersten Reaktionsstufe, die normalerweise nach 40 bis 180 Minuten beendet ist, wird in der zweiten Stufe der pH-Wert auf 2,0 bis 7,0 eingestellt und bei einer Temperatur von ebenfalls 50 bis 90°C so lange weiterkondensiert, bis die Viskosität der Lösung 4 bis 1000 mm²/s bei 80°C beträgt.

Der saure pH-Wert in der zweiten Stufe, der vorzugsweise bei pH 3,0 bis 6,5 liegt, wird mit den üblicher Säuren oder sauer reagierenden Verbindungen oder Salzen eingestellt, wobei anorganische Mineralsäuren und insbesondere Schwefelsäure aus Kostengründen bevorzugt eingesetzt werden.

Die Kondensationsreaktion ist dann beendet, wenn die Viskosität einen Wert im Bereich von 4 bis 1000 mm²/s bei 80°C erreicht hat, der mit üblichen Viskositätsmeßmethoden (bspw. Ubbelohde-Viskosimeter) festgestellt werden kann. Der genaue Viskositätswert des Kondensationsproduktes richtet sich bekanntermaßen nach den gewünschten Eigenschaften (Verflüssigungswirkung) des Produktes, wobei der Bereich von 4 bis 30 mm²/s insbesondere für die Herstellung von Betonverflüssigern und der Bereich von 40 bis 1000 mm²/s speziell für die Herstellung von Gips- bzw. Anhydritverflüssigern geeignet ist.

Hat das Kondensationsprodukt die gewünschte Endviskosität in der zweiten Stufe erreicht, so wird die Reaktionslösung wieder alkalisch gestellt, was mit denselben Basen oder basisch reagierenden Verbindungen wie in der ersten Stufe, also insbesondere einem Hydroxid, vorzugsweise Natronlauge, erfolgen kann. Es ist erfindungswesentlich, daß die Nachbehandlung in der dritten Stufe im stark alkalischen Bereich bei pH > 11,0 durchgeführt wird, weil nur auf diese Weise eine wirkungsvolle Reduzierung des überschüssigen, freien Formaldehyd-Gehalts möglich ist. Der genaue pH-Wert bzw. die erforderliche Menge an Lauge ist im wesentlichen vom Molverhältnis der Reaktionskomponenten abhängig. Je mehr Formaldehyd im Verhältnis zu Amino-s-triazin und Sulfit verwendet worden ist, desto mehr Hydroxid muß zugesetzt werden. In der Regel muß man pro Mol freisetzbaren Formaldehyd, der nach den Stufen a) und b) noch vorhanden ist, mindestens 0,5 Mol Hydroxid bspw. in Form von NaOH verwenden. Anstelle von NaOH können natürlich auch andere Hydroxide wie z.B. Calciumhydroxid eingesetzt werden.

Die Nachbehandlung der Kondensationsprodukte im stark alkalischen Bereich erfolgt ebenfalls wie die ersten beiden Stufen bei erhöhter Temperatur, nämlich bei 50 bis 100°C, vorzugsweise bei 60 bis 80°C, so daß aufwendige Temperaturveränderungen während des gesamten Verfahrens entfallen können.

Die stark alkalische Nachbehandlung dauert so lange, bis der freie Formaldehyd-Gehalt sich nicht mehr verändert bzw. einen bestimmten Grenzwert erreicht hat, was in der Regel nach 5 bis 60 Minuten der Fall ist.

Nach Abschluß der Kondensationsreaktion wird die Reaktionslösung abgekühlt, die dann einen pH-Wert von 8 bis 12 aufweist und ohne weitere Nachbehandlung bspw. als Verflüssiger eingesetzt werden kann.

Die nach dem erfindungsgemäßen Verfahren hergestellten Produkte besitzen auch bei relativ hohem Formalineinsatz einen sehr niedrigen freien Formaldehyd-Gehalt, der bei mindestens < 0,1 Gew.-%, vorzugsweise < 0,03 Gew.-%, bezogen auf das Gesamtgewicht der Lösung, liegt.

Außerdem sind die erfindungsgemäß hergestellten Kondensationsprodukte auch bei hoher Feststoffkonzentration ausgesprochen lagerstabil. Sie können in Abhängigkeit vom Feststoffgehalt problemlos mindestens 6 Monate bis 2 Jahre bei Raumtemperatur gelagert werden, ohne daß irgendwelche Qualitätseinbußen festzustellen sind.

Aufgrund ihrer guten verflüssigenden Eigenschaften eignen sich die nach dem Verfahren entsprechend der vorliegenden Erfindung hergestellten Produkte hervorragend als Zusatzmittel für hydraulisch erhärtende Baustoffmischungen wie z.B. Mörtel, Beton, Gips o.ä..

Die nachfolgenden Beispiele sollen die Erfindung näher erläutern, ohne sie jedoch darauf zu beschränken.

### Beispiele

In den Beispielen werden die Herstellung und die Eigenschaften der erfindungsgemäß hergestellten Kondensationsprodukte beschrieben. Die Prüfung der Zementfließmaße erfolgte an einem Zement der Type PZ 35 (Kiefersfelden) mit einer jeweiligen Dosierung von 0,2 Gew.-% an Kondensationsprodukt (Feststoff) bezogen auf das Gewicht des Zements.

### Beispiel 1

Es wird ein Kondensationsprodukt mit folgendem Molverhältnis hergestellt:

| M | F | SO₃ |
|---|---|---|
| 1 | 1,4 | 0,4 |
| M = Melamin F = Formaldehyd SO₃ = Sulfit | | |

### Darstellung

In einem 2 Liter-Dreihalskolben mit Rührer, Rückflußkühler und Tropftrichter werden 280 g Formalin (30 %ig) und 270 g Wasser vorgelegt und mit Natronlauge (20 %ig) auf pH 8,0 bis 8,5 eingestellt. Anschließend werden im Verlauf von 20 bis 30 Minuten 252 g Melamin in die Reaktionslösung eingetragen, bevor man 20 g NaOH (20 %ig) zutropfen läßt (Dauer 10 - 15 Minuten), um die Reaktionslösung auf einen pH-Wert von 11,5 einzustellen. Daraufhin wird die Lösung auf 70 bis 80°C aufgeheizt und gleichzeitig 76 g Natriumpyrosulfit (Na₂S₂O₅) im Verlauf von 10 bis 15 Minuten in das Reaktionsgemisch eingetragen.

Sobald kein Sulfit mehr nachweisbar ist, wird die Lösung mit 80 g Schwefelsäure (10 %ig) auf pH 7,0 eingestellt und bei 80°C bis zu einer Endviskosität von 500 mm²/s (bei 80°C) weiterkondensiert.

Anschließend wird durch Zugabe von 25 g NaOH (20 %ig) das Reaktionsgemisch stark alkalisch (pH 12,5) gestellt und bei 80°C 20 Minuten lang nachbehandelt. Vor dem Abkühlen wird die Lösung mit 500 ml Wasser verdünnt.

### Eigenschaften

Feststoffgehalt: 26,8 Gew.-%
freier Formaldehydgehalt: < 0,03 %
Zementfließmaß: 22,2 cm (Blindwert 17,8 cm)

### Beispiel 2

Es wird ein Kondensationsprodukt mit folgendem Molverhältnis hergestellt:

| M | F | SO₃ |
|---|---|---|
| 1 | 2,58 | 1,22 |
| M = Melamin F = Formaldehyd SO₃ = Sulfit | | |

### Darstellung

Es werden, wie in Beispiel 1 beschrieben, 516 g Formalin (30 %ig) und 270 g Wasser bei einem pH-Wert von 8,0 bis 8,5 vorgelegt, anschließend 252 g Melamin zugegeben und mit 37 g NaOH (20 %ig) auf pH 11,5 eingestellt. Bei gleichzeitigem Aufheizen auf 70 bis 80°C werden 232 g Natriumpyrosulfit zugegeben und so lange gerührt, bis kein Sulfit mehr nachweisbar ist.

Daraufhin wird der pH-Wert mit 124 g H₂SO₄ (10 %ig) auf 6,0 eingestellt und bei 80°C bis zu einer Endviskosität von 9 mm²/s (bei 80°C) weiterkondensiert.

Im Anschluß daran stellt man den pH-Wert der Reaktionslösung mit 37 g NaOH (20 %ig) stark alkalisch (pH 11,3) und kocht bei 80°C 20 Minuten lang, ehe man abkühlt.

### Eigenschaften Feststoffgehalt: 43,1 Gew.-% freier Formaldehyd-Gehalt: < 0,01 % Zementfließmaß: 24,7 cm (Blindwert 18,0 cm)

### Beispiel 3

Es wird ein Kondensationsprodukt mit folgendem Molverhältnis hergestellt:

| M | F | SO₃ |
|---|---|---|
| 1 | 2,58 | 1,22 |
| M = Melamin F = Formaldehyd SO₃ = Sulfit | | |

### Darstellung

Es werden, wie in Beispiel 1 beschrieben, 516 g Formalin (30 %ig) und 270 g Wasser bei einem pH-Wert von 8,0 bis 8,5 vorgelegt, daraufhin 252 g Melamin zugegeben und mit 47 g NaOH (20 %ig) auf pH 11,7 eingestellt. Schließlich werden bei gleichzeitigem Aufheizen auf 70 bis 80°C noch 232 g Natriumpyrosulfit in die Reaktionslösung eingetragen und so lange gerührt, bis kein Sulfit mehr nachweisbar ist.

Anschließend stellt man den pH-Wert mit 75 g H₂SO₄ (50 %ig) auf 4,9 ein und läßt das Reaktionsgemisch bis zu einer Endviskosität von 150 mm²/s (bei 80°C) weiterkondensieren.

Nach Erreichen dieses Umsetzungsgrades wird das Produkt mit 124 g NaOH (20 %ig) 40 Minuten lang bei 80°C nachbehandelt, ehe man es abkühlen läßt.

### Eigenschaften Feststoffgehalt: 46,1 Gew.-% freier Formaldehyd-Gehalt: < 0,02 % Zementfließmaß: 21,8 cm (Blindwert 18,2 cm)

### Beispiel 4

Es wird ein Kondensationsprodukt mit folgendem Molverhältnis hergestellt:

| M | F | SO₃ |
|---|---|---|
| 1 | 5,56 | 1,22 |
| M = Melamin F = Formalin SO₃ = Sulfit | | |

### Darstellung

Es werden, wie in Beispiel 1 beschrieben, 556 g Formalin (30 %ig) und 100 g Wasser bei einem pH-Wert von 8,0 bis 8,5 vorgelegt, anschließend 126 g Melamin in die Reaktionslösung eingetragen und mit 17 g NaOH (20 %ig) auf pH 10,9 eingestellt.

Daraufhin werden unter gleichzeitigem Aufheizen auf 70 bis 80°C 115 g Natriumpyrosulfit zugegeben und so lange gerührt, bis kein Sulfit mehr nachweisbar ist.

Anschließend wird der pH-Wert mit 37 g Schwefelsäure (10 %ig) auf 5,3 eingestellt und die Reaktionslösung so lange bei 80°C weiterkondensiert, bis eine Endviskosität von 8 mm²/s (bei 80°C) erreicht worden ist.

Im Anschluß daran wird die Reaktionslösung mit 370 g NaOH (20 %ig) 180 Minuten lang bei 80°C nachbehandelt, ehe man das Produkt abkühlen läßt.

### Eigenschaften

Feststoffgehalt: 34,4 Gew.-%
freier Formaldehyd-Gehalt: < 0,02 %
Zementfließmaß: 22,8 cm (Blindwert 17,9 cm)

### Beispiel 5

Es wird ein Kondensationsprodukt mit folgendem Molverhältnis hergestellt:

| M | F | SO₃ |
|---|---|---|
| 1 | 2,0 | 1,0 |
| M = Melamin F = Formaldehyd SO₃ = Sulfit | | |

### Darstellung

Es werden, wie in Beispiel 1 beschrieben, 400 g Formalin (30 %ig) und 247 g Wasser bei pH 8,0 bis 8,5 vorgelegt, 252 g Melamin eingetragen und mit 41 g NaOH (20 %ig) auf pH 11,9 eingestellt.

Anschließend erfolgt die Zugabe von 190 g Natriumpyrosulfit bei gleichzeitigem Aufheizen auf 70 bis 80°C.

Ist kein Sulfit mehr nachweisbar, wird mit 224 g Schwefelsäure (10 %ig) auf pH 5,5 eingestellt und das Reaktionsgemisch bei 80°C so lange weiterkondensiert, bis die Endviskosität 6 mm²/s (bei 80°C) erreicht wird.

Daraufhin erfolgt mit Hilfe von 60 g NaOH (20 %ig) eine fünfminütige Nachbehandlung bei 80°C in stark alkalischem Milieu (pH 11,3), ehe das Produkt abgekühlt wird.

### Eigenschaften

Feststoffgehalt: 40,1 Gew.-%
freier Formaldehyd-Gehalt: < 0,01 %
Zementfließmaß: 22,5 cm (Blindwert 18,1 cm)

## Patentansprüche

1. Verfahren zur Herstellung von Sulfonsäuregruppen enthaltenden Kondensationsprodukten auf Basis von Amino-s-triazinen mit wenigstens zwei Aminogruppen und Formaldehyd, indem man
a) Amino-s-triazin, Formaldehyd und Sulfit im Molverhältnis 1 : 1,3 bis 6 : 0,3 bis 1,5 in wäßriger Lösung bei einem pH-Wert von 9,0 bis 12,0 und einer Temperatur von 50 bis 90°C so lange kondensiert, bis kein Sulfit mehr nachweisbar ist,
b) anschließend bei einem pH-Wert von 2,0 bis 7,0 und einer Temperatur von 80 bis 90 °C so lange weiterkondersiert, bis die Viskosität der Lösung 4 bis 1000 mm²/s bei 80 °C beträgt, dadurch gekennzeichnet daß
c) anschließend das Kondensationsprodukt solange im stark alkalischen Bereich bei pH > 11,0 bei einer Temperatur von 50 bis 100 °C nachbehandelt wird, bis der freie Formaldehydgehalt einen konstanten Wert von < 0,1 Gew.-%, bezogen auf das Gesamtgewicht der Lösung, erreicht hat.

2. Verfahren nach Anspruch 1,
**dadurch gekennzeichnet,**
daß man als Amino-s-triazin Melamin einsetzt.

3. Verfahren nach den Ansprüchen 1 und 2,
**dadurch gekennzeichnet,**
daß das Molverhältnis Amino-s-triazin : Formaldehyd : Sulfit 1 : 2,0 bis 3,0 : 0,8 bis 1,3 beträgt.

4. Verfahren nach den Ansprüchen 1 bis 3,
**dadurch gekennzeichnet,**
daß man die Konzentration der Reaktionskomponenten in der wäßrigen Lösung so einstellt, daß das Kondensationsprodukt mit einem Feststoffgehalt von 25 bis 55 Gew.-%, insbesondere 40 bis 50 Gew.-%, anfällt.

5. Verfahren nach den Ansprüchen 1 bis 4,
**dadurch gekennzeichnet,**
daß man den pH-Wert in der ersten Stufe auf 10,5 bis 11,5 einstellt.

6. Verfahren nach den Ansprüchen 1 bis 5,
**dadurch gekennzeichnet,**
daß der pH-Wert in der zweiten Stufe zwischen 3,0 und 6,5 liegt.

7. Verfahren nach den Ansprüchen 1 bis 6,
**dadurch gekennzeichnet,**
daß man in der dritten Stufe den stark alkalischen pH-Wert mit Hilfe von Natronlauge einstellt.

8. Verfahren nach Anspruch 7,
**dadurch gekennzeichnet,**
daß man pro Mol des nach den Stufen a) und b) noch freisetzbaren Formaldehyds mindestens 0,5 Mol Hydroxid einsetzt.

9. Verfahren nach den Ansprüchen 1 bis 8,
**dadurch gekennzeichnet,**
daß die Temperatur in der dritten Stufe 60 bis 80 °C beträgt.

## Claims

1. Process for the production of sulphonic acid group-containing condensation products based on amino-s-triazines with at least two amino groups and formaldehyde in that one
a) condenses amino-s-triazine, formaldehyde and sulphite in the mole ratio of 1:1.3 to 6:0.3 to 1.5 in aqueous solution at a pH value of 9.0 to 12.0 and at a temperature of 50 to 90°C until no more sulphite is detectable,
b) subsequently, further condenses at a pH value of 2.0 to 7.0 and at a temperature of 50 to 90°C until the viscosity of the solution amounts to 4 to 1000 mm²/s at 80°C, characterised in that
c) subsequently the condensation product is after-treated in the strongly alkaline range at pH > 11.0 at a temperature of 50 to 100°C until the free formaldehyde content has reached a constant value of < 0.1 wt.%, referred to the total weight of the solution.

2. Process according to claim 1, characterised in that one uses melamine as amino-s-triazine.

3. Process according to claims 1 and 2, characterised in that the mole ratio of amino-s-triazine:formaldehyde: sulphite amounts to 1:2.0 to 3.0:0.8 to 1.3.

4. Process according to claims 1 to 3, characterised in that one so adjusts the concentration of the reaction components in the aqueous solution that the condensation product is obtained with a solids content of 25 to 55 wt.%, especially of 40 to 50 wt.%.

5. Process according to claims 1 to 4, characterised in that the pH value in the first step is adjusted to 10.5 to 11.5.

6. Process according to claims 1 to 5, characterised in that the pH value in the second step lies between 3.0 and 6.5.

7. Process according to claims 1 to 6, characterised in that one adjusts the strongly alkaline pH value in the third step with the help of caustic soda solution.

8. Process according to claim 7, characterised in that, per mole of formaldehyde which can still be liberated after steps a) and b), one uses at least 0.2 mole of hydroxide.

9. Process according to claims 1 to 8, characterised in that the temperature in the third step amounts to 60 to 80°C.

## Revendications

1. Procédé de préparation de produits de condensation comprenant des groupes d'acide sulfonique sur la base d'amino-s-triazines avec au moins deux groupes aminés et du formaldéhyde, dans lequel
a) on condense de l'amino-s-triazine, du formaldéhyde et du sulfite selon un rapport molaire de 1 : 1,3 à 6 : 0,3 à 1,5 dans une solution aqueuse dont la valeur de pH est comprise entre 9,0 et 12,0 et à une température de 50 à 90°C jusqu'à ce que le sulfite ne soit plus décelable;
b) on continue ensuite la condensation à une valeur de pH de 2,0 à 7,0 et à une température de 80 à 90°C jusqu'à ce que la viscosité de la solution soit de 4 à 1000 mm²/s à 80°C,
c) puis on soumet le produit de condensation dans une plage fortement alcaline de pH supérieur à 11,0 et à une température de 50 à 100°C à un traitement subséquent jusqu'à ce que la teneur en formaldéhyde libre ait atteint une valeur constante de < 0,1 % en poids par rapport au poids total de la solution.

2. Procédé selon la revendication 1, caractérisé en ce que l'on utilise de la mélamine en tant qu'amino-s-triazine

3. Procédé selon les revendications 1 et 2, caractérisé en ce que le rapport molaire amino-s-triazine : formaldéhyde : sulfite est de 1 : 2,0 à 3,0 : 0,8 à 1,3.

4. Procédé selon les revendications 1 à 3, caractérisé en ce que l'on règle la concentration des composants de la réaction dans la solution aqueuse de manière que le produit de condensation ait une teneur en solides de 25 à 50 % en poids et en particulier de 40 à 50 % en poids.

5. Procédé selon les revendications 1 à 4, caractérisé en ce que l'on règle la valeur du pH au cours de la première étape sur 10,5 à 11,5.

6. Procédé selon les revendications 1 à 5, caractérisé en ce que la valeur du pH pendant la seconde étape est comprise entre 3,0 et 6,5.

7. Procédé selon les revendications 1 à 6, caractérisé en ce que pendant la troisième étape, on règle le pH sur une valeur fortement alcaline à l'aide de soude caustique.

8. Procédé selon la revendication 7, caractérisé en ce que l'on utilise au moins 0,5 mole d'hydroxyde par mole du formaldéhyde encore libérable après les étapes a) et b).

9. Procédé selon les revendications 1 à 8, caractérisé en ce que la température de la troisième étape est comprise entre 60 et 80°C.
